# EUROPEAN PATENT APPLICATION

(11) **EP 2 600 450 A1**
(43) Date of publication of application: **05.06.2013**
(21) Application number: 11812209.2
(22) Date of filing: 29.06.2011
(51) Int. Cl.: H01M 4/62, H01M 4/13, H01M 4/139

(54) **NON-AQUEOUS ELECTROLYTE RECHARGEABLE BATTERY**

(30) Priority: 30.07.2010 JP 2010171534
(71) Applicant: Sanyo Electric Co., Ltd., Osaka 570-8677 (JP)
(72) Inventor: SUGIMORI, Masanori, Moriguchi-shi Osaka 570-8677 (JP); OOKITA, Kazunari, Moriguchi-shi Osaka 570-8677 (JP); KIDA, Yoshinori, Moriguchi-shi Osaka 570-8677 (JP)
(74) Representative: Glawe, Delfs, Moll
(86) International application number: PCT/JP2011/064886
(87) International publication number: WO 2012/014616

(57) **Abstract**

It is an object to provide a nonaqueous electrolyte secondary battery whose battery characteristics can be considerably improved by considerably improving the dispersibility of a carbon conductive agent and forming a good conductive network, and a method for producing the nonaqueous electrolyte secondary battery. A polyvinylpyrrolidone polymer serving as a dispersant and a polyglycerin-condensed ricinoleic acid ester are mixed with N-methyl-2-pyrrolidone serving as a dispersion medium, and then acetylene black is added thereto to prepare a carbon slurry. Subsequently, a positive electrode active material and a binder are mixed with the carbon slurry to prepare a positive electrode active material slurry. A positive electrode 11 is produced using the positive electrode active material slurry, and then a nonaqueous electrolyte secondary battery is produced using the positive electrode 11.

## Description

### Technical Field

The present invention relates to a carbon slurry and a method for preparing the carbon slurry, an electrode for nonaqueous electrolyte secondary batteries and a method for producing the electrode, and a nonaqueous electrolyte secondary battery and a method for producing the nonaqueous electrolyte secondary battery.

### Background Art

In recent years, reduction in size and weight of mobile devices such as cellular phones, notebook computers, and PDAs has significantly advanced, and power consumption has been increased with the development of multifunctional products. Therefore, in nonaqueous electrolyte secondary batteries used as power supplies of these devices, a reduction in weight and an increase in capacity have been demanded.

Also in recent years, in order to address environmental issues derived from automobile emission, hybrid electric vehicles that use both gasoline engines of automobiles and electric motors are being developed. Nickel-metal hydride batteries are currently used as power supplies of such electric vehicles. Studies are now being made on the usage of nonaqueous electrolyte secondary batteries that can achieve higher capacities and higher outputs than nickel-metal hydride batteries.

An electrode for the above-described nonaqueous electrolyte secondary batteries is generally produced by the following method. An active material, a carbon conductive agent, and a binder are added to a solvent and then kneaded with a mixer or the like to prepare an active material slurry. The active material slurry is applied onto a current collector and then dried.
However, the thus-produced electrode poses a problem in that properties of the active material cannot be sufficiently exhibited due to insufficient dispersion of the carbon conductive agent.

Accordingly, it has been proposed that the dispersibility of a carbon conductive agent be improved by using a polyvinylpyrrolidone polymer as a dispersant (refer to PTL 1 below).
It has also been proposed that battery characteristics be improved by adding a fluorine-based nonionic surfactant to a positive electrode mixture layer (refer to PTL 2 below).
It has also been proposed that battery characteristics be improved by disposing a coating layer on an active material, the coating layer being composed of a carbon conductive agent or a mixture including a carbon conductive agent and a conductive polymer dispersant (refer to PTL 3 below).

### Citation List

### Patent Literature

PTL 1: Japanese Published Unexamined Patent Application No. 2003-157846
PTL 2: Japanese Published Unexamined Patent Application No. 2002-75330
PTL 3: Japanese Published Unexamined Patent Application No. 2003-142097

### Summary of Invention

### Technical Problem

However, the techniques disclosed in PTLs 1 to 3 have the following problems.

### (1) Problem of technique disclosed in PTL 1

Even if a dispersant is used as described above, current collection at an electrode becomes insufficient due to electrical repulsion between the active material and the carbon conductive agent. As a result, the output characteristics cannot be improved.

### (2) Problem of technique disclosed in PTL 2

In general, surfactants have poor adsorbability to the surface of carbon materials. Therefore, to sufficiently disperse a carbon material using a surfactant, the surfactant needs to be added in a large amount. However, the addition of a large amount of surfactant decreases the conductivity in an electrode. An effect of improving battery characteristics due to the improvement in the dispersibility of a carbon material is cancelled by degradation of battery characteristics due to the decrease in the conductivity in an electrode. Thus, an improvement in battery characteristics is not achieved. In particular, the dispersion effect of a surfactant in an organic solvent such as N-methyl-2-pyrrolidone is much smaller than the dispersion effect of a surfactant in an aqueous solution. Therefore, to increase the dispersion effect in an organic solvent, a larger amount of surfactant needs to be added. As a result, the problem of a decrease in the conductivity in an electrode becomes more apparent.

### (3) Problem of technique disclosed in PTL 3

Even if a coating layer composed of a carbon conductive agent or a mixture including a carbon conductive agent and a conductive polymer dispersant is disposed on an active material, sufficient electronic conductivity between active materials is not achieved, which increases the internal resistance in an electrode.
Thus, battery characteristics cannot be improved.

In view of the foregoing, it is an object of the present invention to provide a nonaqueous electrolyte secondary battery whose battery characteristics can be considerably improved by considerably improving the dispersibility of a carbon conductive agent and forming a good conductive network in an electrode through an improvement in the electronic conductivity between active materials. It is another object of the present invention to provide a method for producing the nonaqueous electrolyte secondary battery.

### Solution to Problem

To achieve the above object, in the present invention, N-methyl-2-pyrrolidone serving as a dispersion medium includes a carbon conductive agent, a polyvinylpyrrolidone polymer serving as a dispersant, and a nonionic surfactant.

In the case where an active material slurry is prepared using a carbon slurry and a nonaqueous electrolyte secondary battery is produced using the active material slurry, a polyvinylpyrrolidone polymer, which is the same type of compound as N-methyl-2-pyrrolidone serving as a dispersion medium, is added as a dispersant and thus a mutual dissolution effect between the pyrrolidones is produced. Consequently, the carbon conductive agent can be sufficiently dispersed by the dispersant. Furthermore, the carbon conductive agent can be bound with the active material using the nonionic surfactant while the carbon conductive agent is sufficiently dispersed. Accordingly, an electrochemical reaction can be promoted because many three-phase interfaces of the active material, the carbon conductive agent, and an electrolytic solution are formed on the active material. A good conductive network can also be formed in an electrode because the carbon conductive agent is disposed on the surface of the active material in a dispersed manner. This means that the output characteristics of nonaqueous electrolyte secondary batteries can be significantly improved.

The addition of the polyvinylpyrrolidone polymer improves the output characteristics, and can also improve the stability of the carbon slurry and active material slurry and considerably decrease the viscosity of the slurries. Therefore, since the amount of N-methyl-2-pyrrolidone used as a dispersion medium can be reduced, the production cost of nonaqueous electrolyte secondary batteries can be considerably reduced.

To achieve both the improvement in output characteristics and the reduction in production cost, the amount of the polyvinylpyrrolidone added relative to the carbon conductive agent and the amount of the nonionic surfactant added relative to the carbon conductive agent are each preferably 20% by mass or less and more preferably 0.01% by mass or more and 10% by mass or less. When carbon black is used as the carbon conductive agent, the above-described two amounts described above are each preferably 0.01% by mass or more and 10% by mass or less.

The nonionic surfactant desirably includes a fatty acid ester surfactant, the fatty acid ester surfactant is desirably a ricinoleic acid ester, and the ricinoleic acid ester is desirably a polyglycerin-condensed ricinoleic acid ester. The nonionic surfactant desirably includes a higher alkyl ether surfactant, and the higher alkyl ether surfactant is desirably a polyoxyethylene alkyl ether.

The higher alkyl ether surfactant is a surfactant having a structure in which alkyl groups having 6 or more carbon atoms are bonded to each other through an ether bond. The polyoxyethylene alkyl ether is a surfactant having a structure in which an alkyl group having 6 or more carbon atoms is bonded to polyoxyethylene through an ether bond. The number of carbon atoms of the alkyl groups in the higher alkyl ether surfactant may be 6 or more, but is desirably 6 to 22 and particularly desirably 10 to 18. This is because, when the number of carbon atoms is small, the surface activity is degraded and, when the number of carbon atoms is large, the viscosity is increased and thus ease of handling is degraded.
The carbon conductive agent desirably includes carbon black such as furnace black, acetylene black, or Ketjenblack.

To achieve the above object, in the present invention, a carbon conductive agent, a polyvinylpyrrolidone polymer serving as a dispersant, and a nonionic surfactant are mixed with N-methyl-2-pyrrolidone serving as a dispersion medium.

To achieve the above object, in the present invention, an active material layer is formed on a surface of a current collector, and the active material layer includes an active material, a binder, a carbon conductive agent, a polyvinylpyrrolidone polymer serving as a dispersant, and a nonionic surfactant.

Non-limiting examples of the polyvinylpyrrolidone polymer include a polymer of vinylpyrrolidone and a copolymer of vinylpyrrolidone and another vinyl compound.
An example of the binder is a thermoplastic resin such as polyvinylidene fluoride or polyimide.

The active material is desirably a positive electrode active material.
However, the active material is not limited to a positive electrode active material, and may be a negative electrode active material. Examples of the negative electrode active material include carbon materials such as graphite, metal oxides such as lithium titanate and molybdenum dioxide, silicon, and tin.

The positive electrode active material is desirably a layered lithium nickel-manganese composite oxide.
When a positive electrode active material not containing cobalt is used, the cost of batteries can be reduced. However, the positive electrode active material is not limited to the above-described lithium composite oxide, and may be a lithium transition metal composite oxide or a lithium transition metal oxyanion compound. Examples of the lithium transition metal composite oxide include lithium cobaltate, a lithium cobalt-nickel-manganese composite oxide, a lithium aluminum-nickel-manganese composite oxide, and an aluminum-nickel-cobalt composite oxide.
An example of the lithium transition metal oxyanion compound is lithium iron phosphate. Among the positive electrode active materials, LiNi_{1/3}C_{O1/3}Mn_{1/3}O₂ and a lithium cobalt-nickel-manganese composite oxide represented by general formula Li₁₊ₓNiₐMn_{b}CO_{c}O_{2+d} (in the formula, x, a, b, c, and d satisfy x + a + b + c = 1, 0.7 ≤ a + b, 0 < x ≤ 0.1, 0 ≤ c/(a + b) < 0.35, 0.7 ≤ a/b ≤ 2.0, and -0.1 ≤ d ≤0.1) are preferably used.

To achieve the above object, in the present invention, there are included an active material slurry preparation step of mixing an active material, a binder, a carbon conductive agent, a polyvinylpyrrolidone polymer serving as a dispersant, and a nonionic surfactant with N-methyl-2-pyrrolidone serving as a dispersion medium to prepare an active material slurry; and an active material layer formation step of applying the active material slurry onto a current collector to form an active material layer on the current collector.

In the active material slurry preparation step, it is desirable that the carbon conductive agent, the polyvinylpyrrolidone polymer serving as a dispersant, and the nonionic surfactant be mixed with the N-methyl-2-pyrrolidone to prepare a carbon slurry, and then the active material and the binder be mixed with the carbon slurry to prepare the active material slurry.
By employing this method, the dispersibility of the carbon conductive agent is further improved.
To further improve the dispersibility of the carbon conductive agent, it is desirable that, when the carbon slurry is prepared, the polyvinylpyrrolidone polymer serving as a dispersant and the nonionic surfactant be mixed with the N-methyl-2-pyrrolidone and then the carbon conductive agent be added thereto.

To achieve the above object, in the present invention, there are included an electrode assembly including the positive electrode described above, a negative electrode, and a separator disposed between the positive electrode and the negative electrode; a nonaqueous electrolyte; and a battery package that contains the electrode assembly and the nonaqueous electrolyte. To achieve the above object, in the present invention, an electrode assembly is produced by disposing a separator between the positive electrode described above and a negative electrode, and then the electrode assembly and a nonaqueous electrolyte are incorporated in a battery package.

A solute of the nonaqueous electrolytic solution may be a publicly known lithium salt. Examples of the lithium salt include LiPF₆, LiAsF₆, LiBF₄, LiCF₃SO₃, LiN(C₁F₂₁₊₁SO₂) (CₘF₂ₘ₊₁SO₂) (1 and m are each an integer of 0 or more), LiC(CₚF₂ₚ₊₁SO₂) (C_{q}F_{2q+1}SO₂) (CᵣF₂ᵣ₊₁SO₂) (p, q, and r are each an integer of 0 or more), and lithium difluoro(oxalato)borate. These nonaqueous electrolytes may be used alone or in combination of two or more.
The solute is normally used while being dissolved in a solvent in a concentration of 0.1 to 1.5 M/L and preferably 0.5 to 1.5 M/L.

Examples of a solvent of the nonaqueous electrolytic solution include cyclic carbonates, cyclic carbonates in which some of hydrogen groups are fluorinated, linear carbonates, linear carbonates in which some of hydrogen groups are fluorinated, esters, cyclic ethers, linear ethers, nitriles, and amides. Examples of the cyclic carbonates include ethylene carbonate, propylene carbonate, butylene carbonate, and vinylene carbonate. Examples of the cyclic carbonates in which some of hydrogen groups are fluorinated include trifluoropropylene carbonate and fluoroethyl carbonate. Examples of the linear carbonates include dimethyl carbonate, ethyl methyl carbonate, diethyl carbonate, methyl propyl carbonate, ethyl propyl carbonate, and methyl isopropyl carbonate.

### Advantageous Effects of Invention

According to the present invention, since the dispersibility of the carbon conductive agent can be considerably improved and a good conductive network can be formed, the output characteristics of nonaqueous electrolyte secondary batteries can be considerably improved. Brief Description of Drawings

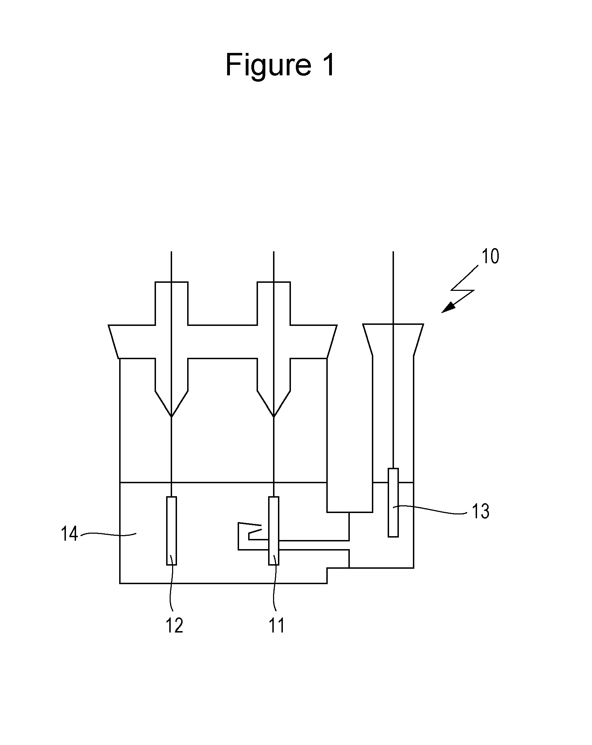

[Figure 1] Figure 1 is a diagram for describing a three-electrode test cell described in Examples. Description of Embodiments

The present invention will now be further described in detail based on the following embodiment. However, the present invention is not limited thereto and can be suitably modified without departing from the scope of the present invention.

### (Production of positive electrode [working electrode])

First, PITZCOL K-30 (manufactured by Dai-ichi Kogyo Seiyaku Co., Ltd.) which is a polyvinylpyrrolidone polymer and a polyglycerin-condensed ricinoleic acid ester which is a nonionic surfactant were dissolved in N-methyl-2-pyrrolidone serving as a dispersion medium. Subsequently, acetylene black serving as a carbon conductive agent was mixed therewith to prepare a carbon black paste. The ratio of the polyvinylpyrrolidone polymer to the acetylene black and the ratio of the polyglycerin-condensed ricinoleic acid ester to the acetylene black were each 1.4% by mass.

Next, a positive electrode active material represented by LiNi_{1/3}Co_{1/3}Mn_{1/3}O₂, the carbon black paste, and an N-methyl-2-pyrrolidone solution in which polyvinylidene fluoride serving as a binder was dissolved were mixed with one another at a mass ratio of positive electrode active material:carbon conductive agent:binder = 92:5:3 to prepare a positive electrode active material slurry. The positive electrode active material slurry was then applied onto a positive electrode current collector composed of aluminum foil at a coating speed of 0.5 m/min and dried at 120°C at an airflow rate of 5 m/sec. After that, the resultant product was rolled with a reduction roller and a positive electrode current collector tab composed of aluminum was attached to produce a positive electrode (working electrode).

### (Production of negative electrode and reference electrode)

A negative electrode (counter electrode) and a reference electrode were each composed of metallic lithium.

### (Preparation of nonaqueous electrolytic solution)

LiPF₆ was dissolved, in a concentration of 1 mole/L, in a mixed solvent prepared by mixing ethylene carbonate, methyl ethyl carbonate, and dimethyl carbonate at a volume ratio of 3:3:4. Furthermore, vinylene carbonate was dissolved therein in a concentration of 1% by mass to prepare a nonaqueous electrolytic solution.

### (Production of battery)

A three-electrode test cell 10 shown in Figure 1 was produced using the positive electrode (working electrode), the negative electrode (counter electrode), the reference electrode, and the nonaqueous electrolytic solution. In Figure 1, 11 denotes the positive electrode, 12 denotes the negative electrode, 13 denotes the reference electrode, and 14 denotes the nonaqueous electrolytic solution.

### (Other matters)

In the embodiment above, the positive electrode has been described as an example, but the present invention can also be applied to the negative electrode. For example, the present invention can be applied to the case where a carbon material, a metal oxide such as lithium titanate or molybdenum dioxide, silicon, tin, or the like is used as a negative electrode active material.

### EXAMPLES

### (Example 1)

The cell mentioned in Description of Embodiments was used. Hereinafter, the thus-produced cell is referred to as "Invention cell A1".

### (Example 2)

A test cell was produced in the same manner as in Example 1, except that a polyoxyethylene alkyl ether (LEOCOL SC-70 manufactured by Lion Corporation) was used as the nonionic surfactant.
Hereinafter, the thus-produced cell is referred to as "Invention cell A2".

### (Example 3)

A test cell was produced in the same manner as in Example 2, except that furnace black was used as the carbon conductive agent and LiNi_{0.5}C_{O0.2}Mn_{0.3}O₂ was used as the positive electrode active material.
Hereinafter, the thus-produced cell is referred to as "Invention cell A3".

### (Example 4)

A test cell was produced in the same manner as in Example 1, except that LiNi_{0.6}Mn_{0.4}O₂ was used as the positive electrode active material.
Hereinafter, the thus-produced cell is referred to as "Invention cell A4".

### (Comparative Example 1)

A test cell was produced in the same manner as in Example 1, except that the polyvinylpyrrolidone polymer and the nonionic surfactant were not added.
Hereinafter, the thus-produced cell is referred to as "Comparative cell Z1".

### (Comparative Example 2)

A test cell was produced in the same manner as in Example 1, except that the ratio of the polyvinylpyrrolidone polymer to the acetylene black was changed to 2.8% by mass and the nonionic surfactant was not added.
Hereinafter, the thus-produced cell is referred to as "Comparative cell Z2".

### (Comparative Example 3)

A test cell was produced in the same manner as in Example 1, except that the content of the polyvinylpyrrolidone polymer relative to the acetylene black was changed to 11.3% by mass and the nonionic surfactant was not added.
Hereinafter, the thus-produced cell is referred to as "Comparative cell Z3".

### (Comparative Example 4)

A test cell was produced in the same manner as in Example 3, except that the polyvinylpyrrolidone polymer and the nonionic surfactant were not added.
Hereinafter, the thus-produced cell is referred to as "Comparative cell Z4".

### (Comparative Example 5)

A test cell was produced in the same manner as in Example 4, except that the polyvinylpyrrolidone polymer and the nonionic surfactant were not added.
Hereinafter, the thus-produced cell is referred to as "Comparative cell Z5".

### (Experiment)

The Invention cells A1 to A4 and the Comparative cells Z1 to Z5 were each charged and discharged under the following conditions, and then the outputs obtained when discharged at 25°C and -30°C were measured. Tables 1 to 3 show the results classified by the types of active materials. In Table 1, outputs were shown as an index obtained when the output of the Comparative cell Z1 was defined as 100. In Table 2, outputs were shown as an index obtained when the output of the Comparative cell Z4 was defined as 100. In Table 3, outputs were shown as an index obtained when the output of the Comparative cell Z5 was defined as 100.

### Charge/discharge conditions

At 25°C, each of the three-electrode test cells was charged at a constant current density of 0.2 mA/cm² until 4.3 V (vs. Li/Li⁺) and then charged at a constant voltage of 4.3 V (vs. Li/Li⁺) until the current density reached 0.04 mA/cm². Subsequently, the three-electrode test cell was discharged at a constant current density of 0.2 mA/cm² until 2.5 V (vs. Li/Li⁺).

Next, each of the three-electrode test cells was charged at a current density of 0.2 mA/cm² up to 50% of the rated capacity [i.e., the state of charge (SOC) was 50%], and the output characteristics of each cell were measured at 25°C and -30°C. At 25°C, each cell was discharged at 0.08 mA/cm², 0.4 mA/cm², 0.8 mA/cm², and 1.6 mA/cm² for 10 seconds. In each of the cases, the battery voltage 10 seconds after the discharge was plotted against the current to determine the current at a battery voltage of 2.5 V by extrapolation. Thus, the output (mW/cm²) was calculated. At -30°C, each cell was discharged at 0.08 mA/cm², 0.4 mA/cm², 0.8 mA/cm², 1.2 mA/cm², 1.6 mA/cm², and 2.4 mA/cm² for 10 seconds. In each of the cases, the battery voltage 10 seconds after the discharge was plotted against the current to determine the current at a battery voltage of 2.5 V by extrapolation. Thus, the output (mW/cm²) was calculated.

**[Table 1]**

| Type of cell | Content of PVP (% by mass) | Nonionic surfactant | | Output characteristic ratio at 25°C | Output characteristic ratio at -30°C |
|---|---|---|---|---|---|
| | | Type | Ratio (% by mass) | | |
| Invention cell A1 | 1.4 | Polyglycerin-condensed ricinoleic acid ester | 1.4 | 110.9 | 117.3 |
| Invention cell A2 | 1.4 | Polyoxyethylene alkyl ether | 1.4 | 111.6 | 106.4 |
| Comparati ve cell Z1 | - | - | - | 100.0 | 100.0 |
| Comparati ve cell Z2 | 2.8 | - | - | 102.3 | 106.1 |
| Comparati ve cell Z3 | 11.3 | - | - | 94.4 | 90.4 |

| | | | | | |
|---|---|---|---|---|---|
| Note that LiNi_{1/3}Co_{1/3}Mn_{1/3}O₂ was used as the positive electrode active material and acetylene black was used as the carbon conductive agent. | | | | | |

**[Table 2]**

| Type of cell | Content of PVP (% by mass) | Nonionic surfactant | | Output characteristic ratio at 25°C | Output characteristic ratio at -30°C |
|---|---|---|---|---|---|
| | | Type | Ratio (% by mass) | | |
| Invention cell A3 | 1.4 | Polyoxyethylene alkyl ether | 1.4 | 104.3 | 105.9 |
| Comparati ve cell Z4 | - | - | - | 100.0 | 100.0 |

| | | | | | |
|---|---|---|---|---|---|
| Note that LiNi_{0.5}Co_{0.2}Mn_{0.3}O₂ was used as the positive electrode active material and furnace black was used as the carbon conductive agent. | | | | | |

**[Table 3]**

| Type of cell | Content of PVP (% by mass) | Nonionic surfactant | | Output characteristic ratio at 25°C | Output characteristic ratio at -30°C |
|---|---|---|---|---|---|
| | | Type | Ratio (% by mass) | | |
| Invention cell A4 | 1.4 | Polyglycerin-condensed ricinoleic acid ester | 1.4 | 108.3 | 103.6 |
| Comparati ve cell Z5 | - | - | - | 100.0 | 100.0 |

| | | | | | |
|---|---|---|---|---|---|
| Note that LiNi_{0.6}Mn_{0.4}O₂ was used as the positive electrode active material and acetylene black was used as the carbon conductive agent. | | | | | |

It was confirmed from Table 1 that the output characteristics of the Invention cells A1 and A2 to which both the polyvinylpyrrolidone polymer and the nonionic surfactant were added were better at room temperature (25°C) and a low temperature (-30°C) than those of the Comparative cell Z1 to which the polyvinylpyrrolidone polymer and the nonionic surfactant were not added. This may be because, in the cells to which both the polyvinylpyrrolidone polymer and the nonionic surfactant were added, efficient current collection from a positive electrode active material was achieved and a good conductive network was formed.

The output characteristics of the Comparative cell Z2 to which a small amount (2.8% by mass) of the polyvinylpyrrolidone polymer was added but the nonionic surfactant was not added were better at room temperature (25°C) and a low temperature (-30°C) than those of the Comparative cell Z1. However, the degree of improvement in the output characteristics of the Comparative cell Z2 was small compared with the Invention cells A1 and A2. The output characteristics of the Comparative cell Z3 that is different from the Comparative cell Z2 in that a large amount (2.8% by mass) of the polyvinylpyrrolidone polymer was added were poorer at room temperature (25°C) and a low temperature (-30°C) than those of the Comparative cell Z1. This may be because the surface of the carbon black is modified by the polyvinylpyrrolidone polymer and the dispersibility of the carbon black is improved, but the addition of only the polyvinylpyrrolidone polymer does not achieve sufficient current collection in a positive electrode and, in particular, when a large amount of the polyvinylpyrrolidone polymer is added, the current collectability in the positive electrode is significantly degraded.

As shown in Tables 2 and 3, the same results as above were obtained even when the composition of the positive electrode active material and the type of carbon conductive agent were changed. In other words, it was confirmed that the output characteristics of the Invention cells A3 and A4 to which both the polyvinylpyrrolidone polymer and the nonionic surfactant were added were better at room temperature (25°C) and a low temperature (-30°C) than those of the Comparative cells Z4 and Z5 to which the polyvinylpyrrolidone polymer and the nonionic surfactant were not added.

Although not shown in Tables 1 to 3, in the case where only the surfactant was added without adding the polyvinylpyrrolidone polymer, the dispersibility was poor and the amount of N-methyl-2-pyrrolidone used could not be reduced (that is, when the amount of N-methyl-2-pyrrolidone was the same as that in Examples, slurry could not be prepared). This may be because, when an organic solvent is used, an effect of improving the dispersibility by the addition of a surfactant is extremely restricted as described above.

### Industrial Applicability

The secondary battery according to the present invention can be used as various driving power supplies. In particular, the secondary battery is highly useful in the applications that require high outputs, such as tools and automobiles.

### Reference Signs List

| | |
|---|---|
| 10 | three-electrode test cell |
| 11 | working electrode (positive electrode) |
| 12 | counter electrode (negative electrode) |
| 13 | reference electrode |
| 14 | nonaqueous electrolytic solution |

## Claims

1. A carbon slurry comprising N-methyl-2-pyrrolidone serving as a dispersion medium and a carbon conductive agent, a polyvinylpyrrolidone polymer serving as a dispersant, and a nonionic surfactant that are included in the N-methyl-2-pyrrolidone.

2. The carbon slurry according to Claim 1, wherein the nonionic surfactant includes a fatty acid ester surfactant.

3. The carbon slurry according to Claim 2, wherein the fatty acid ester surfactant is a ricinoleic acid ester.

4. The carbon slurry according to Claim 3, wherein the ricinoleic acid ester is a polyglycerin-condensed ricinoleic acid ester.

5. The carbon slurry according to Claim 1, wherein the nonionic surfactant includes a higher alkyl ether surfactant.

6. The carbon slurry according to Claim 5, wherein the higher alkyl ether surfactant is a polyoxyethylene alkyl ether.

7. The carbon slurry according to any one of Claims 1 to 6, wherein the carbon conductive agent includes carbon black.

8. A method for preparing a carbon slurry comprising mixing a carbon conductive agent, a polyvinylpyrrolidone polymer serving as a dispersant, and a nonionic surfactant with N-methyl-2-pyrrolidone serving as a dispersion medium.

9. An electrode for nonaqueous electrolyte secondary batteries comprising an active material layer formed on a surface of a current collector, wherein the active material layer includes an active material, a binder, a carbon conductive agent, a polyvinylpyrrolidone polymer serving as a dispersant, and a nonionic surfactant.

10. The electrode for nonaqueous electrolyte secondary batteries according to Claim 9, wherein the active material is a positive electrode active material.

11. The electrode for nonaqueous electrolyte secondary batteries according to Claim 10, wherein the positive electrode active material is a layered lithium nickel-manganese composite oxide.

12. A method for producing an electrode for nonaqueous electrolyte secondary batteries, the method comprising:
an active material slurry preparation step of mixing an active material, a binder, a carbon conductive agent, a polyvinylpyrrolidone polymer serving as a dispersant, and a nonionic surfactant with N-methyl-2-pyrrolidone serving as a dispersion medium to prepare an active material slurry; and
an active material layer formation step of applying the active material slurry onto a current collector to form an active material layer on the current collector.

13. The method for producing an electrode for nonaqueous electrolyte secondary batteries according to Claim 12, wherein, in the active material slurry preparation step, the carbon conductive agent, the polyvinylpyrrolidone polymer serving as a dispersant, and the nonionic surfactant are mixed with the N-methyl-2-pyrrolidone to prepare a carbon slurry, and then the active material and the binder are mixed with the carbon slurry to prepare the active material slurry.

14. The method for producing an electrode for nonaqueous electrolyte secondary batteries according to Claim 13, wherein, when the carbon slurry is prepared, the polyvinylpyrrolidone polymer serving as a dispersant and the nonionic surfactant are mixed with the N-methyl-2-pyrrolidone and then the carbon conductive agent is added thereto.

15. The method for producing an electrode for nonaqueous electrolyte secondary batteries according to any one of Claims 12 to 14, wherein the active material is a positive electrode active material.

16. A nonaqueous electrolyte secondary battery comprising an electrode assembly including the positive electrode according to Claim 10 or 11, a negative electrode, and a separator disposed between the positive electrode and the negative electrode, a nonaqueous electrolyte, and a battery package that contains the electrode assembly and the nonaqueous electrolyte.

17. A method for producing a nonaqueous electrolyte secondary battery, the method comprising producing an electrode assembly by disposing a separator between the positive electrode that is produced by the method according to Claim 15 and a negative electrode, and then incorporating the electrode assembly and a nonaqueous electrolyte in a battery package.
